Europäisches Patentamt

European Patent Office

Office européen des brevets

(19)

(11) Veröffentlichungsnummer: **0 213 289**
**A1**

(12) # EUROPÄISCHE PATENTANMELDUNG

(21) Anmeldenummer: 86107635.4

(22) Anmeldetag: 05.06.86

(51) Int. Cl.⁴: **B65G 1/04 , B66F 9/07**

(30) Priorität: 14.08.85 DE 3529206
03.09.85 DE 3531444

(43) Veröffentlichungstag der Anmeldung:
**11.03.87 Patentblatt 87/11**

(84) Benannte Vertragsstaaten:
**AT BE CH DE FR GB IT LI LU NL SE**

(71) Anmelder: **OHRA Regalanlagen GmbH**
**Alfred-Nobel-Str. 34-44**
**D-5014 Kerpen 4 (Türnich)(DE)**

(72) Erfinder: **Hölscher, Ottokar**
**Marsdorfer Strasse 22**
**D-5000 Köln 40(DE)**

(74) Vertreter: **Patentanwälte Müller-Boré, Deufel,**
**Schön, Hertel, Lewald, Otto**
**Isartorplatz 6**
**D-8000 München 2(DE)**

(54) **Vorrichtung zur Ein- oder Auslagerung von Gütern in oder aus einem Wabenregal.**

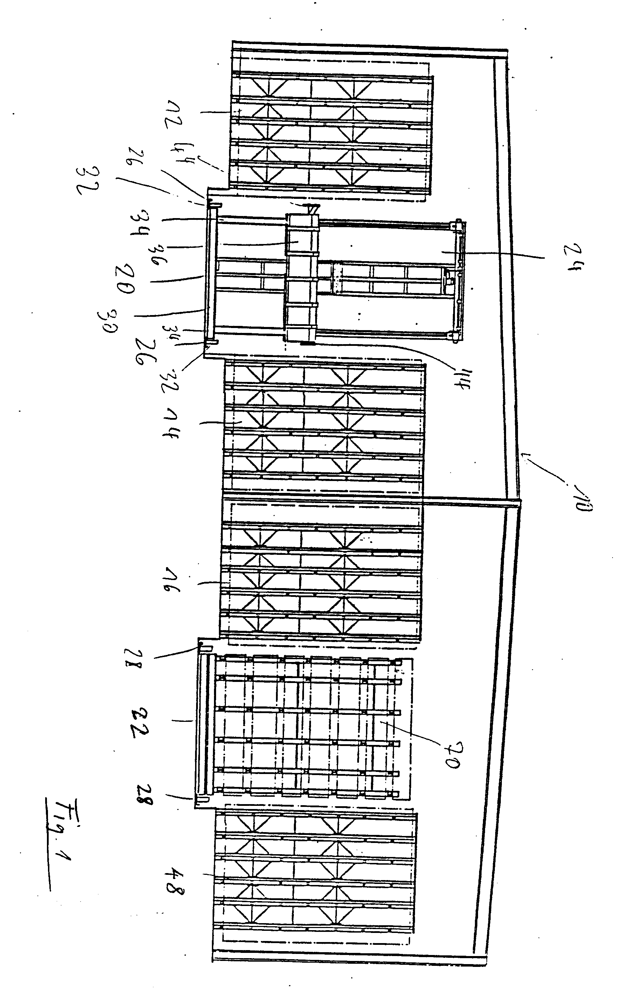

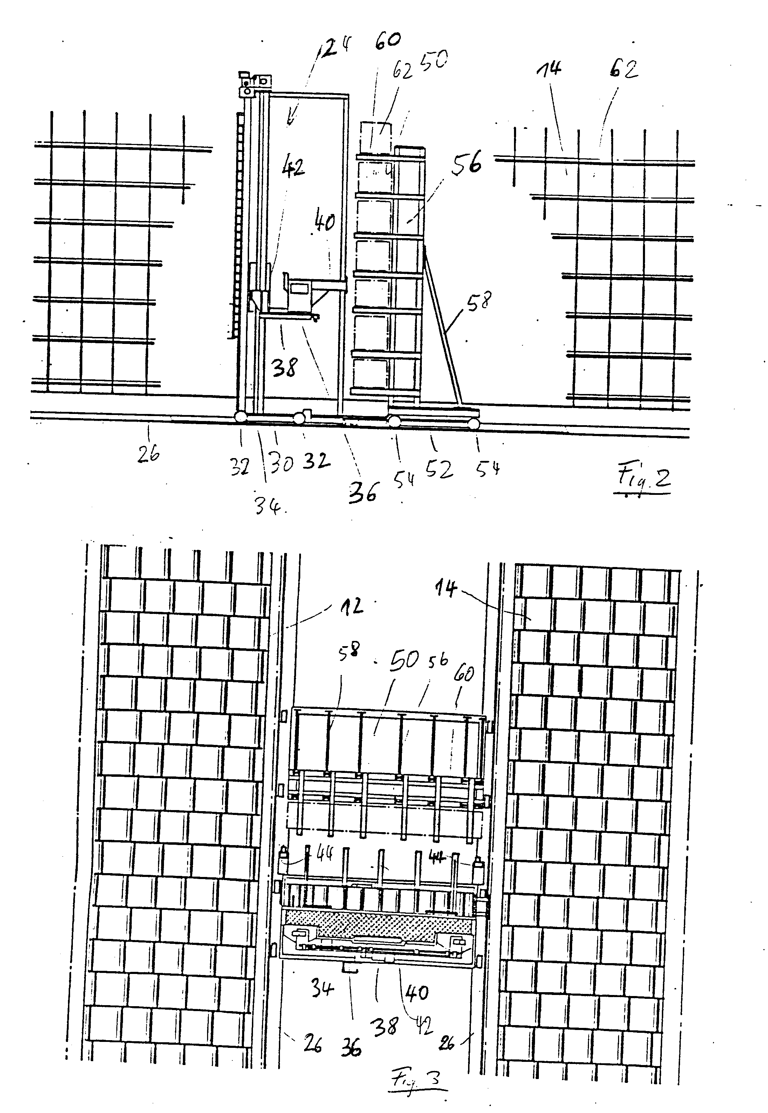

(57) Die Vorrichtung zur Ein-oder Auslagerung von Gütern auf einem Wabenregal (14) besteht aus einem längs des Wabenregals (14) fahrbar angeordneten Bedienungsgerät (24) und einem ebenfalls längs des Wabenregals (14) verfahrbaren Transportwagen (5o). An dem bedienungsgerät ist ein vertikal verfahrbarer Rollengang (36) angeordnet, der mit Kragarmen (4o) zur Aufnahme einer Last ausgebildet ist. Der Transportwagen (5o) weist Kragarme (6o) auf, die zu den Kragarmen (4o) des Bedienungsgerätes (24) hin gerichtet sind. Der Transportwagen (5o) ist entweder an das Bedienungsgerät (24) über eine Teleskopverbindung angekoppelt oder er wird von dem Bedienungsgerät (24) über eine Fernsteuerung betätigt. Durch die Benutzung des Transportwagens (5o) als Zwischen-oder Satellitenmagazin können Fahrzeiten des Bedienungsgerätes (24) eingespart werden, da dieses nicht nach jeder Aus-oder Einlagerung bis zu einer Übergabestelle am Ende der Wabenregale fahren muß (Fig. 2).

Fig. 2

## Vorrichtung zur Ein-oder Auslagerung von Gütern in oder aus einem Wabenregal

Die Erfindung betrifft eine Vorrichtung zur Ein- oder Auslagerung von Gütern in oder aus einem Wabenregal, mit einem längs des Wabenregels fahrbar angeordneten Bedienungsgerät mit in Vertikalrichtung verfahrbarem Rollengang und an den Rollengang angeordneten Kragarmen.

Derartige Wabenregale werden insbesondere verwendet für die Einlagerung von Langgut wie Stahl oder dgl. Beiderseits eines Ganges steht dabei in der Regel ein Wabenregal, das entweder mit gebündeltem Material oder mit Langgutmaterial in Kassetten beschickt wird. Dies geschieht mit Hilfe des Bedienungsgerätes, das gleichzeitig als Kommissioniergerät eingesetzt wird. Dabei wird mittels einer an dem Bedienungsgerät angeordneten Zugmaschine eine Kassette oder ein Bund aus einer Wabe des Regals gezogen und die Bedienungsperson entnimmt aus dem Bund oder der Kassette das von einem Kunden geordete Material. Es ist aber auch möglich, einzelne Stangen aus Regalfächern herauszuziehen und auf dem Bedienungsgerät abzulagern.

Da das Bedienungsgerät nur eine Kassette aufnehmen kann, um diese entweder ein-oder auszulagern, muß es bei jedem Ein-oder Auslagerungsvorgang an den Aufnahme-oder Abgabeort am Anfang des Wabenregals fahren. Da die Wabenregale sehr lang und das Bedienungsgerät wegen der Aufnahme großer Gewichte sehr schwer ausgeführt ist und demnach nur mit einer verhältnismäßig geringen Geschwindigkeit gefahren werden kann, kann nur eine begrenzte Anzahl von Lastspielen durchgeführt werden,so daß eine wirtschaftliche Nutzung derartiger Wabenregale in der Regale nicht gegeben ist.

Der Erfindung liegt die Aufgabe zugrunde, eine Vorrichtung zu schaffen, mit welcher die Anzahl der Lastspiele und damit die Wirtschaftlichkeit von Wabenregalen erhöht werden kann.

Diese Aufgabe wird erfindugsgemäß gelöst durch einen längs des Wabenregals verfahrbaren Transportwagen mit den Kragarmen des Bedienungsgerätes gegenüberliegend angeordneten Lagerungselementen.

Ein derartiger erfindungsgemäßer Transportwagen ist dem Bedienungsgerät zugeordnet. Der Transportwagen kann je nach Ausführung eine mehr oder minder große Anzahl übereinander angeordneter Reihen von vorzugsweise als Kragarme ausgebildeten Lagerungselementen aufweisen, so daß mehrere Kassetten oder Bünde auf dem Transportwagen abgelagert werden können. Zum Einlagern von Gut kann der Transportwagen unabhängig von dem Bedienungsgerät bestückt werden und der volle Transportwagen wird dem Bedienungsgerät zugeordnet, so daß dieses ohne jeweils an den Aufnahme-oder Abgabeort am Anfang des Regals fahren zu müssen eine größere Anzahl von Waben füllen kann. Dazu entnimmt das Bedienungsgerät mit seinen Kragarmen jeweils einen Bund oder eine Kassette von dem Transportwagen, fährt nur ein kurzes Stück von dem Transportwagen weg und lagert den Bund oder die Kassette in das Wabenregal ein. Der gleiche Vorgang spielt sich in umgekehrter Reihenfolge ab, wenn aus dem Wabenregal kommissioniert werden soll, d.h. wenn Bünde oder Kassetten aus dem Wabenregal entnommen werden. Diese können auf dem Transportwagen zwischengelagert werden, bis dieser voll ist. Danach wird der Transportwagen an den Anfang des Wabenregals gefahren, um dort entleert zu werden. Auch beim Entnahmevorgang muß demnach das Bedienungsgerät nicht nach jeder Entnahme einen unter Umständen langen Weg von dem Entnahmeort bis zum Übergabeort zurücklegen. Mit Hilfe des Transportwagens kann eine bessere Ausnutzung des Wabenregals mit - schnellerer Einlagerung und Auslagerung erfolgen. Außerdem werden Energiekosten, die bei den sonst langen Transportwegen des Bedienungsgerätes anfallen, eingespart.

Gemäß einer bevorzugten Ausführungsform sind das Bedienungsgerät und der Transportwagen auf Schienen verfahrbar. Diese Schienen sind in einem Mittelgang zwischen gegen überliegenden Wabenregalen angeordnet.

In Ausgestaltung der Erfindung ist der Transportwagen über eine Teleskopstange an dem Bedienungswagen angehängt. Dadurch wird auf einen eigenen Antrieb an dem Transportwagen verzichtet. Die Teleskopstange ist erforderlich, da zur Übergabe von Gut von dem Bedienungsgerät an den Transportwagen bzw. zur Entnahme von Gut von dem Transportwagen eine Relativbewegung zwischen den Geräten erforderlich ist. Die Teleskopstange ist vorzugsweise als hydraulische Kolbenzylindereinheit ausgeführt.

Gemäß einer weiteren bevorzugten Ausführungsform sind an dem Transportwagen ein Antriebsaggregat und eine Fernbedienungseinrichtung angeordnet. Das Antriebsaggregat kann beispielsweise aus einem Elektromotor bestehen. Die Fernbedienung, die vorzugsweise von dem Bedienungsgerät aus erfolgt, kann über ein Kabel oder drahtlos über Funk oder Infrarotstrahlung oder dgl. durchgeführt werden.

Zur leichteren Handhabung des ein-oder auszulagernden Gutes sind vorzugsweise in den Kragarmen an dem Bedienungsgerät und/oder an dem Transportwagen Rollen angeordnet.

In Weiterbildung der Erfindung ist der Transportwagen in Fahrtrichtung und quer zur Fahrtrichtung des Bedienungsgerätes verfahrbar. Der Transportwagen ist quer zur Fahrtrichtung des Bedienungsgerätes vorzugsweise auch auf Schienen verfahrbar, die an den Enden des Wabenregals senkrecht zu den Schienen des Bedienungsgerätes angeordnet sind. Auf diese Weise ist es möglich, daß ein beladener Transportwagen aus dem Bereich des Ganges gefahren wird, in welchem das Bedienungsgerät angeordnet ist, so daß ein leerer Transportwagen in diesen Gang gefahren werden kann. Das Bedienungsgerät kann dann ohne große Unterbrechung diesen Leeren Transportwagen beladen, um seinen Kommissionierungsaufgaben nachzukommen. Das gleiche kann erfolgen, wenn das Regal bestückt werden soll. Sobald ein Transportwagen abgearbeitet und entleert ist, kann dieser aus dem Gang gefahren werden und dem Bedienungsgerät wird ein anderer beladener Transportwagen zugeordnet, der dann ebenfalls ohne Unterbrechung entladen werden kann.

Um dem Transportwagen die Verfahrbarkeit in zwei Richtungen zu ermöglichen, sind an dem Transportwagen wahlweise ein-und ausfahrbare Räder für senkrecht zueinander verlaufende Fahrtrichtungen angeordnet. Es ist aber auch möglich, daß die Räder des Transportwagens um 90° verschwenkbar ausgebildet sind.

Ausführungsbeispiele der Erfindung werden nachstehend anhand der Zeichnung näher erläutert. Es zeigen:

Fig. 1 einen Querschnitt durch eine Lagerhalle mit zwei Paaren einander gegenüberliegender Wabenregale,

Fig. 2 eine Ansicht auf ein Wabenregal mit davor angeordnetem Bedienungsgerät und Transportwagen,

Fig. 3 eine Draufsicht auf die Anordnung nach Fig.2 und

Fig. 4 eine Draufsicht auf den Endbereich einer Wabenregalanordnung.

Fig. 1 zeigt eine Lagerhalle 1o im Querschnitt. In der Lagerhalle sind zwei Paare gegenüberliegender Wabenregale 12,14 und 16,18 angeordnet. Zwischen den sich über eine sehr große Länge erstreckenden Wabenregalen 12 und 16 ist ein Mittelgang 2o und zwischen den Wabenregalen 16 und 18 ein Mittelgang 22 vorgesehen. Das Niveau der Mittelgänge 2o und 22 ist gegenüber der Aufstandsfläche der Wabenregale 12, 14 und 16, 18 tiefer angeordnet, damit auch die unteren Waben der Regale für ein Bedienungsgerät 24 zugänglich sind.

Auf jedem der Mittelgänge 2o und 22 ist ein derartiges Bedienungsgerät 24 auf Schienen 26 verfahrbar. In dem Mittelgang 22 sind Schienen 28 angeordnet. Das Bedienungsgerät 24 weist einen Rahmen 3o auf, an welchem ein Fahrwerk mit Rädern 32 angeordnet ist. An dem Rahmen 3o ist eine Vertikalstütze 34 in Form eines Rahmenwerkes angeordnet. An Vertikalschienen 34 ist ein Rollengang 36 vertikal verfahrbar angeordnet. Der Rollengang 36 besteht aus einer begehbaren Platte 38 und Kragarmen 4o, auf welchen das ein-oder auszulagernde Material abgelegt wird. Ferner ist eine Konsole 42 angeordnet, an welcher die Bedienungsknöpfe für das Bedienungsgerät 24 angeordnet sind. An beiden Seiten des Rollenganges 36 ist eine Zugvorrichtung 44 vorgesehen, mit welcher die mit Greifbügeln versehenen Kassetten aus den Wabenregalen 12 bis 18 herausgezogen werden können, um auf den Kragarmen 4o aufzuliegen.

Damit das Bedienungsgerät 24 nicht nach jedem Lastspiel,d.h. nach jeder Einlagerung oder Auslagerung eines Gutes aus einem der Wabenregale bis zu dem Übergabeort am Kopfende der Wabenregale fahren muß, ist dem Bedienungsgerät 24 ein Transportwagen 5o zugeordnet. Der Transportwagen 5o weist einen Rahmen 52 auf, an welchem auf den Schienen 26 fahrbare Räder 54 angeordnet sind. Auf dem Rahmen 54 erstreckt sich ein Gittermast 56 senkrecht nach oben. Der Gittermast 56 ist über Streben 58 mit dem Rahmen 52 verbunden. An dem Gittermast 56 sind Kragarme 6o angeordnet, die zu den Kragarmen 4o an dem Rollengang 36 des Bedienungsgerätes 24 hin gerichtet sind. Die Anzahl der übereinander angeordneten Kragarmreihen 6o entspricht vorzugsweise der übereinander angeordneten Waben 62 der Wabenregale 12 bis 18. Bei dem in den Figuren gezeigten Ausführungsbeispiel wird der Transportwagen 5o über eine Fernbedienung von der Konsole 42 an dem Rollengang 36 aus gesteuert, d.h. dessen Fahrtrichtung längs der Wabenregale und zu dem Bedienungsgerät 24 hin oder von diesem Bedienungsgerät 24 weg.

Es ist aber möglich, den Transportwagen 5o über eine Teleskopverbindung mit dem Bedienungsgerät 24 zu koppeln, so daß der Transportwagen 5o über das Bedienungsgerät 24 angetrieben wird. Zur Durchführung der Lastspiele muß das Bedienungsgerät 24 ausreichend Abstand von dem Transportwagen 5o haben und zur Übergabe bzw. zur Entnahme einer Last an bzw. von dem Transportwagen 5o muß das Bedienungsgerät 24 sich dem Transportwagen 5o so weit nähern, daß die Kragarme 4o des Bedienungsgerätes in die Zwischenräume zwischen den Kragarmen 6o des Transportwagens 5o hineinfahren können. Bei dem in den Figuren gezeigten Ausführungsbeispielen weisen die Wabenregale sieben übereinanderliegende Wabenreihen auf und dementsprechend sind an dem Transportwagen 5o sieben übereinanderliegende Reihen von Kragarmen 6o angeordnet, so daß die gesamte zur Verfügung stehende Höhe der Lagerhalle 1o ausgenutzt werden kann. Auf den Kragarmen 6o des Transportwagens 5o sind mit strichpunktierten Linien Kassetten 62 angedeutet, die entweder von dem Bedienungsgerät 24 ein-oder auszulagern sind.

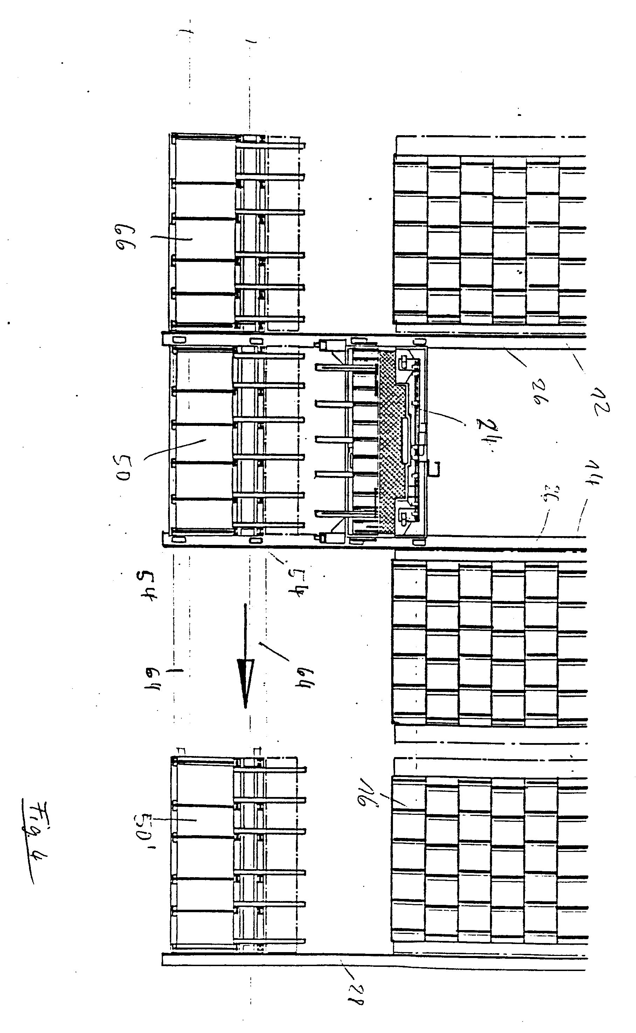

Fig. 4 zeigt eine Draufsicht auf den Endbereich der Wabenregale 12 bis 16. Das Bedienungsgerät 24 ist bis vor die Stirnflächen der Wabenregale gefahren und hat dabei den beladenen Transportwagen 5o vor sich her geschoben, bis dessen Räder 54 mit Schienen 64 aufgerichtet sind, die senkrecht zu den Schienen 26 bzw. 28 verlaufen. Sobald der Wagen 5o die in Fig.4 gezeigte Stellung eingenommen hat, kann er von dem Bedienungsgerät 24 abgekoppelt und über geeignete Räder auf den Schienen 64 von den Schienen 26 weggefahren werden, um beispielsweis die Stellung 5o' einzunehmen. In dieser Stellung kann der Transportwagen entladen werden. Gleichzeitig kann ein Transportwagen 66 bis auf die Schienen 26 verschoben werden. Der Transportwagen 66 wird dann an das Bedienungsgerät 24 angekoppelt, um mit diesem zwischen den Wabenregalen 12 und 14 verfahren, um entweder beladen oder abgeladen zu werden. Um den Transportwagen 5o auf den Schienen 64 verfahren zu können, können entweder die Räder 54 um eine Vertikalachse verdreht werden oder es sind an dem Rahmen 52 des Transportwagens 5o Räder vorgesehen, die hydraulisch auf die Schienen 64 absenkbar sind. Während des Absenkens wird der Transportwagen 5o etwas angehoben, so daß die Räder 54 außer Kontakt mit den Schienen gelangen. An dem Transportwagen 66 sind entsprechende Räder vorgesehen, so daß dieser wahlweise auf den Schienen 64 oder 26 verfahrbar ist. In Fig. 1 ist ein Transportwagen 7o gezeigt, der zwischen den Wabenregalen 16 und 18 verfahrbar und einem entsprechenden Bedienungsgerät zugeordnet ist.

Während des Einsatzes des Bedienungsgerätes 24 entweder zum Ein-oder Auslagern von Bünden oder Kassetten in die Wabenregale hinein oder aus den Wabenregalen heraus wird der Transportwagen 5o mitgezogen und die entsprechenden Lastspiele mittels des Bedienungsgerätes 24 durchgeführt, bis der Transportwagen 5o entweder gefüllt oder entleert ist. Danach fährt das Bedienungsgerät 24 zusammen mit dem Transportwagen 5o bis vor das Stirnende der Wabenregale, um den Transportwagen gegen einen anderen entsprechend vorbereiteten Transportwagen auszutauschen. Da das Bedienungsgerät 24 nicht nach jedem Lastspiel bis ans Ende der Wabenregale fahren muß, sondern mehrere Lastspiele durchführen kann, bis ein Wechsel, des Transportwagens oder dessen Entleerung am Ende der Wabenregale erfolgen kann, kann sehr viel Zeit und damit Kosten eingespart werden.

Gemäß einer weiteren bevorzugten Ausführungsform ist der Transport in Form eines Paternosters ausgebildet und die Lagerelemente, die insbesondere Kragarme sind, sind an dem Paternoster angeordnet, so daß die die Dauer der Lastspiele weiter verringert werden kann, da während einer Entnahme oder einer Einlagerung die entsprechenden Lagerelemente an dem Transportwagen des Bedienungswagens angepaßt werden können.

## Ansprüche

1. Vorrichtung zur Ein-oder Auslagerung von Gütern in oder aus einem Wabenregal, mit einem längs des Wabenregals verfahrbar angeordneten Bedienungsgerät mit in Vertikalrichtung verfahrbarem Rollengang und an dem Rollengang angeordneten Kragarmen, **gekennzeichnet** durch einen längs des Wabenregals (12 bis 18) verfahrbaren Transportwagen (5o, 7o) mit den Kragarmen (4o) des Bedienungsgerätes (24) gegenüberliegend angeordneten Lagerungselementen (60).

2. Vorrichtung nach Anspruch 1, dadurch **gekennzeichnet** , daß das Bedienungsgerät (24) und der Transportwagen (5o) auf Schienen (26) verfahrbar sind.

3. Vorrichtung nach Anspruch 1 oder 2, dadurch **gekennzeichnet**, daß der Transportwagen (5o) über eine Teleskopstange an dem Bedienungswagen angehängt ist.

4. Vorrichtung nach Anspruch 3, dadurch **gekennzeichnet**, daß die Teleskopstange eine hydraulische Kolben/Zylinder-Einheit ist.

5. Vorrichtung nach Anspruch 1 oder 2, dadurch **gekennzeichnet**, daß an dem Transportwagen ein Antriebsaggregat und eine Fernbedienungseinrichtung angeordnet sind.

6. Vorrichtung nach einem der Ansprüche 1 bis 5, dadurch **gekennzeichnet**, daß in den Kragarmen an dem Bedienungsgerät (24) und/oder den Lagerungselementen an dem Transportwagen (50) Rollen angeordnet sind.

7. Vorrichtung nach einem der Ansprüche 1 bis 6, dadurch **gekennzeichnet**, daß der Transportwagen (5o) in Fahrtrichtung und quer zur Fahrtrichtung des Bedienungsgerätes (24) verfahrbar ist.

8. Vorrichtung nach Anspruch 7, dadurch **gekennzeichnet**, daß an dem Transportwagen (5o) wahlweise aus-und einfahrbare Räder für senkrecht zueinander verlaufende Fahrtrichtungen angeordnet sind.

9. Vorrichtung nach einem der Ansprüche 1 bis 8, dadurch **gekennzeichnet**, daß die Lagerungselemente des Transportwagens an Stützen fest angeordnete Kragarme (60) sind.

10. Vorrichtung nach einem der Ansprüche 1 bis 8, dadurch **gekennzeichnet**, daß die Lagerungselemente in Form eines Paternosters angeordnet sind.

Fig. 1

Fig. 2

Fig. 3

Fig. 4

## EINSCHLÄGIGE DOKUMENTE

EP 86107635.4

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | AT - B - 305 143 (LANG)  <br> * Gesamt, insbesondere Seite 2, Absatz 5 * | 1-3,9, 10 | B 65 G 1/04 <br> B 66 F 9/07 |
| Y | | 6 | |
| | -- | | |
| Y | DE - A - 2 035 952 (UNIROYAL)  <br> * Fig. 8 * | 6 | |
| | -- | | |
| X | WO - A1 - 85/00 796 (ANGELE) | 1 | |
| A | * Gesamt, insbesondere Fig. 1,3 * | 3,5 | |
| | -- | | |
| A | DE - A - 2 056 233 (LICENTIA)  <br> * Fig. 3 * | 7 | |
| | ---- | | |

**RECHERCHIERTE SACHGEBIETE (Int. Cl. 4)**

B 65 G 1/00

B 66 F 9/00

Der vorliegende Recherchenbericht wurde für alle Patentansprüche erstellt.

| Recherchenort | Abschlußdatum der Recherche | Prüfer |
|---|---|---|
| WIEN | 01-10-1986 | PISSENBERGER |